**Europäisches Patentamt**

**European Patent Office**

**Office européen des brevets**

(19)

(11) Veröffentlichungsnummer: **0 266 561 B1**

# EUROPÄISCHE PATENTSCHRIFT

(12)

(45) Veröffentlichungstag der Patentschrift: **05.02.92**

(51) Int. Cl.⁵: **G11B 20/10**, G11B 5/03

(21) Anmeldenummer: **87114424.2**

(22) Anmeldetag: **02.10.87**

(54) **Anordnung zum Aufzeichnen von Daten auf einen magnetischen Aufzeichnungsträger.**

(30) Priorität: **06.10.86 DE 3634029**

(43) Veröffentlichungstag der Anmeldung:
**11.05.88 Patentblatt 88/19**

(45) Bekanntmachung des Hinweises auf die
Patenterteilung:
**05.02.92 Patentblatt 92/06**

(84) Benannte Vertragsstaaten:
**DE GB**

(56) Entgegenhaltungen:
US-A- 3 381 098
US-A- 3 641 524
US-A- 3 665 485
US-A- 4 202 017

IBM TECHNICAL DISCLOSURE BULLETIN,
Band 15, Nr. 3, August 1972, Seiten 897-898,
New York, US; J.D. ARMITAGE Jr. et al.:
"Magnetic recording and readback systems"

PATENT ABSTRACTS OF JAPAN, Band 6, Nr.
62 (P-111)[940], 21. April 1982, Seite 44 P 111;
& JP-A-57 3207 (NIPPON GAKKI SEIZO K.K.)
08-01-1982

IBM TECHNICAL DISCLOSURE BULLETIN,

Band 23, Nr. 9, Februar 1981, Seiten
4314-4316, New York, US; K.B. KLAASSEN:
"AC bias read-while-write driver"

(73) Patentinhaber: **TANDBERG DATA A/S**
**Kjelsasveien 161 Postboks 9 Korsvoll**
**N-0808 Oslo 8(NO)**

(72) Erfinder: **Hardeng, Erik N.**
**Hauges vei 11 D.**
**N-0871 Oslo 8(NO)**

(74) Vertreter: **Goddar, Heinz J., Dr. et al**
**FORRESTER & BOEHMERT Widenmayerstras-**
**se 4/I**
**W-8000 München 22(DE)**

EP 0 266 561 B1

**Beschreibung**

Die Erfindung bezieht sich auf eine Anordnung zum Aufzeichnen von Daten auf einen magnetischen Aufzeichnungsträger.

Zum Aufzeichnen von Daten auf einen magnetischen Aufzeichnungsträger, beispielsweise ein Magnetband oder eine Magnetplatte, wird üblicherweise eine Anordnung mit einem Verstärker verwendet, an dessen Eingängen den aufzuzeichnenden Daten zugeordnete Datensignale und Vormagnetisierungssignale zugeführt werden und dessen Ausgänge mit einem Schreibkopf in einem Magnetkopf verbunden ist, der die Daten auf dem Aufzeichnungsträger aufzeichnet. Eine derartige Anordnung ist beispielsweise aus der DE-OS 32 33 489 bekannt. Bei dieser bekannten Anordnung werden die Datensignale und die Vormagnetisierungssignale jeweils einer Verstärkerstufe des Verstärkers zugeführt. Die Ausgänge der Verstärkerstufen sind parallel geschaltet und mit den Anschlüssen von zwei in Serie geschalteten Wicklungen des Magnetkopfes verbunden, an deren Mittelabgriff eine Betriebsspannung anliegt. Die Verstärkerstufen sind als Schaltglieder ausgebildet, so daß der durch jeweils eine Wicklung des Magnetkopfs fließende Strom sehr steile Flanken aufweist.

Eine weitere Anordnung zum Aufzeichnen von Daten auf einen magnetischen Aufzeichnungsträger ist aus der US-PS 4,383,281 bekannt. Bei dieser bekannten Anordnung sind ebenfalls zwei ausgangsseitig parallel geschaltete Verstärkerstufen vorgesehen, denen die Vormagnetisierungssignale bzw. die Datensignale zugeführt werden. Jede Verstärkerstufe ist als ein Differenzverstärker ausgebildet, dessen gemeinsamer Zweig als Stromquelle ausgebildet ist und deren Eingänge die jeweiligen Signale nicht invertiert bzw. invertiert zugeführt werden. Auch bei dieser bekannten Anordnung weist der durch den Magnetkopf fließende Strom steile Flanken auf, da die beiden Differenzverstärker durch die Vormagnetisierungssignale bzw. Datensignale angesteuert werden, deren Flanken steil ausgebildet sind.

Dadurch, daß die Flanken des durch den Magnetkopf fließenden Schreibstroms sehr steil sind, ist die zeitliche Änderung des Schreibstroms im Magnetkopf sehr groß und die Spannung am Magnetkopf würde gegen unendlich gehen, wenn der Magnetkopf verlustfrei wäre und keine Streukapazitäten aufweisen würde. Dies kann zur Folge haben, daß infolge einer Spannungsbegrenzung den Datensignalen und den Vormagnetisierungssignalen zugeordnete Flußwechsel verändert werden, was die Störsicherheit und die Fehlersicherheit bei der Aufzeichnung der Daten verschlechtern kann.

Außerdem ist aus IBM Technical Disclosure Bulletin, Bd. 15, No. 3, Aug. 1972, S. 897 und 898 eine Einrichtung zum Aufzeichnen bzw. Wiedergeben von Daten auf einen magnetischen Aufzeichnungsträger bekannt, bei der ebenfalls Vormagnetisierungssignale den aufzuzeichnenden Daten entsprechenden Datensignalen überlagert werden. Im eigentlichen Datenkanal ist sowohl im Aufzeichnungs- als auch im Wiedergabezweig jeweils ein Filter vorgesehen. Diese aufeinander abgestimmten Filter lösen die Aufgabe, die Bandbreite des Datenkanales auf das Doppelte des Nyquistbandes zu beschränken. Dazu sind die Filter so ausgelegt, daß das umgeformte Ausgangssignal im Wiedergabezweig aus Signalkomponenten mit überhöhten Kosinusimpulsformen zusammengesetzt ist, so daß sich ein bewertetes Lesesignal eregeben soll, dessen Nulldurchgänge unverzerrt erscheinen und somit eine gegenseitige Beeinflussung aufeinanderfolgender Flußwechsel weitgehend vermieden werden soll. Mit der angestrebten Übertragungsfunktion im Datenkanal läßt sich aber bei einer magnetischen Datenaufzeichnung mit Vormagnetisierung der bei der bekannten Einrichtung nicht berücksichtigte Einfluß steiler Impulsflanken der Daten- und Vormagnetisierungssignale auf den Aufzeichnungsvorgang allein nicht beherrschen.

Der Erfindung liegt daher die Aufgabe zugrunde, eine Anordnung zum Aufzeichnen von Daten auf einen magnetischen Aufzeichnungsträger anzugeben, durch die die Störsicherheit und die Fehlersicherheit erhöht werden kann.

Erfindungsgemäß wird die Aufgabe bei der Anordnung der eingangs genannten Art durch die im Patentanspruch 1 angegebenen Merkmale gelöst.

Die Anordnung gemäß der Erfindung hat den Vorteil, daß die Daten mit großer Genauigkeit auf den magnetischen Aufzeichnungsträger aufgezeichnet werden können und damit mittels eines Lesekopfs mit großer Sicherheit wiedergewonnen werden können. Die Verwendung der dem Verstärker vorgeschalteten Filter erfordert einen geringen Aufwand, da die Filter durch passive Bauelemente aufgebaut werden können.

Es ist möglich, nur die Vormagnetisierungssignale oder die Datensignale über jeweils ein Filter dem Verstärker zuzuführen, jedoch erweist es sich als zweckmäßig, sowohl die Vormagnetisierungssignale als auch die Datensignale über jeweils ein Filter dem Verstärker zuzuführen.

Falls der Verstärker sowohl für die Vormagnetisierungssignale als auch für die Datensignale jeweils eine eigene Verstärkerstufe enthält, der die Vormagnetisierungssignale bzw. die Datensignale nicht invertiert und invertiert zugeführt werden, ist es zweckmäßig, den Eingängen jeder Verstärkerstufe ein Filter vorzuschalten, an dem die jeweiligen Signale nicht invertiert und invertiert anliegen und dessen Ausgänge mit den Eingängen der jeweiligen Verstärkerstufe verbunden sind. Das Filter wird zweckmäßigerweise als RC-Tiefpaßfilter ausgebildet. Bei der Ausbildung des Filters für die Zuführung von invertierenden und nicht invertierenden Signalen ist es vorteilhaft, wenn jedes Filter zwei serielle Widerstände, an denen die nicht invertierten bzw. invertierten Signale anliegen und einen nachgeschalteten parallelen Kondensator enthält, dessen Anschlüsse mit den Eingängen der jeweiligen Verstärkerstufe verbunden sind.

Falls die Verstärkerstufen als Differenzverstärker ausgebildet sind, liegen an den Eingängen jedes Differenzverstärkers die entsprechenden Signale jeweils über ein Filter nicht invertiert und invertiert an.

Bei der Verwendung von Differenzverstärkern als Verstärkerstufen ist es günstig, wenn der dem Magnetkopf zugeführte Schreibstrom im gemeinsamen Zweig jedes Differenzverstärkers durch digitale Datenwörter einstellbar ist, die mittels jeweils eines Digital-Analog-Wandlers in Steuersignale für den jeweiligen Differenzverstärker umgesetzt werden.

Falls in dem Magnetkopf mehrere Schreibköpfe vorgesehen sind, ist es vorteilhaft, wenn zwischen dem Verstärker und dem Magnetkopf eine Schalteinheit angeordnet ist, die den Verstärker mit jeweils einem der Schreibköpfe unter Verwendung einer Kanalauswahlstufe verbindet.

Eine weitere Verbesserung der Aufzeichnung kann dadurch erreicht werden, daß vor und/oder nach jeder Flanke der Datensignale der zugehörige Schreibstrom kurzzeitig erhöht wird. Zu diesem Zweck ist ein Impulsgeber vorgesehen, der bei jeder Flanke der Datensignale ein entsprechendes Steuersignal an den Verstärker abgibt.

Um auch hier steile Flanken des Schreibstroms zu vermeiden, ist es vorteilhaft, wenn der Impulsgeber ein Integrierglied enthält.

Ein Ausführungsbeispiel der Anordnung gemäß der Erfindung wird im folgenden anhand von Zeichnungen näher erläutert. Es zeigen

FIG 1 ein Blockschaltbild der Anordnung,

FIG 2 ein Zeitdiagramm von Signalen an verschiedenen Punkten der in FIG 1 dargestellten Anordnung und

FIG 3 ein Schaltbild der Anordnung.

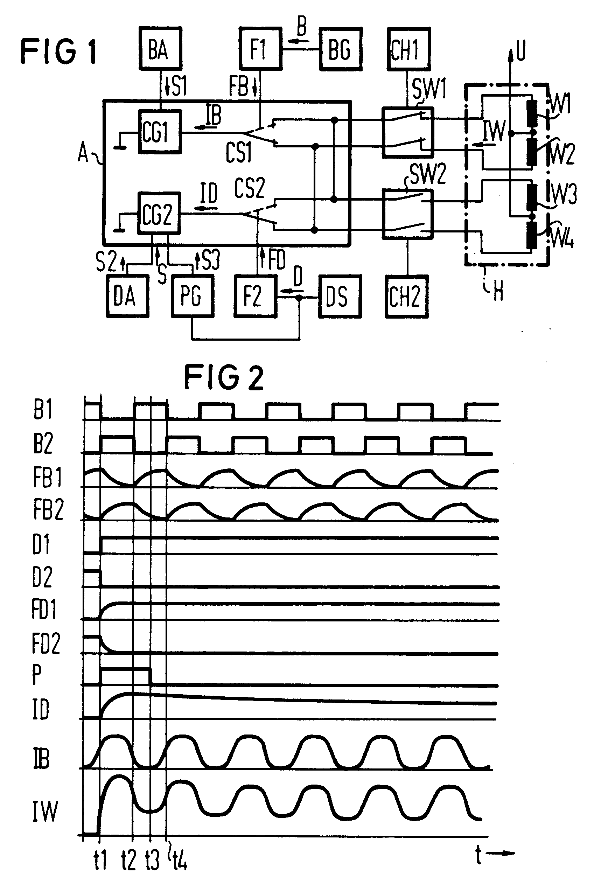

Die in FIG 1 dargestellte Anordnung enthält einen Verstärker A, dessen Ausgänge über Schalteinheiten SW1 und SW2 mit jeweils einem Schreibkopf in einem Magnetkopf H verbunden sind. Bei der Darstellung in FIG 1 wird angenommen, daß der aus zwei Wicklungen W1 und W2 gebildete Schreibkopf ausgewählt wird und Schalter in der Schalteinheit SW1 durch eine Kanalauswahlschaltung CH1 geschlossen ist, während die Schalter in der Schalteinheit SW2 durch die Kanalauswahlschaltung CH2 geöffnet sind.

Der Verstärker A enthält Umschalteinheiten CS1 und CS2, die jeweils einen in Stromquellen CG1 bzw. CG2 erzeugten Schreibstrom IW entweder einem Anschluß der Wicklung W1 oder einem Anschluß der Wicklung W2 zuführt, wobei an dem jeweils anderen Anschluß an einem gemeinsamen Abgriff eine Betriebsspannung U anliegt.

Ein Taktgeber BG erzeugt hochfrequente Vormagnetisierungssignale B, die über ein Filter F1 als gefilterte Vormagnetisierungssignale FB der Umschalteinheit CS1 zugeführt werden. In Abhängigkeit vom Momentanwert der Vormagnetisierungssignale FB wird ein Vormagnetisierungsstrom IB, der den Vormagnetisierungssignalen B zugeordnet ist, den verschiedenen Anschlüssen des Schreibkopfs zugeführt. Die Größe des Vormagnetisierungsstromes IB wird in der Stromquelle CG1 durch ein Steuersignal S1 festgelegt, das von einer Steuereinheit BA abgegeben wird. Die Steuereinheit BA kann beispielsweise einen Digital-Analog-Wandler enthalten, der aus einem entsprechenden digitalen Datenwort das Steuersignal S1 erzeugt.

Eine Datenquelle DS erzeugt Datensignale D, die den aufzuzeichnenden digitalen Daten zugeordnet sind. Diese Datensignale D gelangen über ein Filter F2 als gefilterte Datensignale FD zur Umschalteinheit CS2 und diese führt einen den Datensignalen D zugeordneten Datenstrom ID in Abhängigkeit vom Momentanwert der Datensignale FD ebenfalls den verschiedenen Anschlüssen des Schreibkopfs zu. Der Datenstrom ID wird in der Stromquelle CG2 durch Steuersignale S2 eingestellt, die in einer Steuereinheit DA in ähnlicher Weise wie die Steuersignale S1 erzeugt werden. Zusätzlich kann ein Impulsgenerator PG vorgesehen sein, der durch die Datensignale D angesteuert wird und Steuersignale S3 an die Stromquelle CG2 abgibt, die bei jeder Flanke der Datensignale D den Datenstrom ID kurzzeitig erhöhen.

Da die Ausgänge der Umschalteinheiten CS1 und CS2 parallel geschaltet sind, erfolgt im Schreibkopf eine Summation der Ströme IB und ID und es ergibt sich ein Schreibstrom IW, der von der Spannungsquelle für die Betriebsspannung U jeweils über eine der Wicklungen W1 oder W2, die Schalteinheit SW1, die Umschalteinheiten CS1 und CS2 zu den Stromquellen CG1 und CG2 fließt.

Weitere Einzelheiten der in FIG 1 dargestellten Anordnung werden im folgenden zusammen mit den in FIG 2 dargestellten Zeitdiagrammen beschrieben.

Die von dem Taktgeber BG abgegebenen Vormagnetisierungssignale B sind in FIG 2 als nicht invertierte und invertierte Vormagnetisierungssignale B1 bzw. B2 dargestellt. Das Filter F1, das als Tiefpaßfilter ausgebildet ist, verschleift und verzögert die Flanken der Vormagnetisierungssignale B1 und B2 und begrenzt deren Steilheit, so daß die gefilterten Vormagnetisierungssignale FB1 bzw.

FB2 erzeugt werden. Die Datensignale D werden ebenfalls als nicht invertierte und invertierte Datensignale D1 bzw. D2 von der Datenquelle DS abgegeben und in ähnlicher Weise wie die Vormagnetisierungssignale B1 und B2 in dem Filter F2 verschliffen, so daß gefilterte Datensignale FD1 und FD2 an die Umschalteinheit CS2 abgegeben werden.

Die Umschalteinheiten CS1 und CS2 sind als analoge Schalter ausgebildet, so daß die Ströme IB und ID keinen rechteckförmigen Verlauf aufweisen, sondern ebenfalls Flanken mit einer begrenzten Steigung aufweisen. In dem Impulsgenerator PG wird bei jeder Flanke der Datensignale D ein Impuls P erzeugt, der ebenfalls nach einer Filterung der Stromquelle CG2 zugeführt wird, um nach jeder Flanke der Datensignale D den Datenstrom ID kurzzeitig zu erhöhen. Damit ergibt sich der in FIG 2 gezeigte Datenstrom ID, wenn zum Zeitpunkt t1 das Datensignal D eine Flanke aufweist, die möglichst mit einer Flanke eines Vormagnetisierungssignals B zusammenfallen soll. Zum Zeitpunkt t3 ist der Impuls P beendet und der Datenstrom ID in einer der Wicklungen W1 oder W2, beispielsweise der Wicklung W2 weist den in der FIG 2 dargestellten Verlauf auf. Wenn kein Datenstrom ID vorhanden wäre, hätte der Vormagnetisierungsstrom IB in der Wicklung W2 den ebenfalls in FIG 2 dargestellten Verlauf. Es werden jedoch die Ströme ID und IB summiert, so daß sich in der Wicklung W2 dargestellte gesamte Schreibstrom IW ergibt, wenn das Datensignal D1 den dargestellten Binärwert aufweist. Während der dargestellten Zeitdauer fließt kein Schreibstrom ID durch die wicklung W1, da sich die Umschalteinheit CS2 in der durchgezogen dargestellten Stellung befindet. Jedoch fließt ein entsprechender konstanter Vormagnetisierungsstrom IB durch die beiden Wicklungen W1 bzw. W2, da die Umschalteinheit CS1 in der in FIG 2 dargestellten Zeitspanne in Abhängigkeit der hochfrequenten Vormagnetisierungssignale B mehrfach umgeschaltet wird. Entsprechendes gilt, wenn das Datensignal D1 seinen Binärwert ändert, da dann der Schreibstrom ID nicht mehr durch die Wicklung W2, sondern durch die Wicklung W1 fließt.

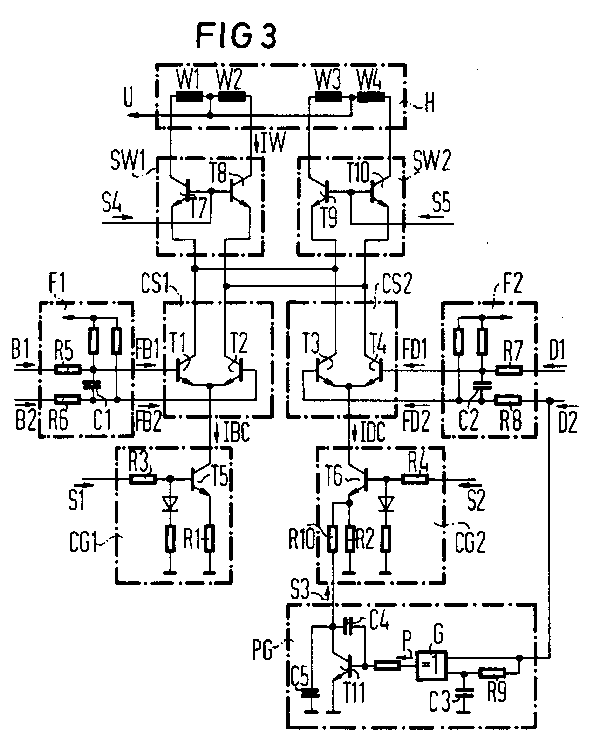

Bei dem in FIG 3 dargestellten Schaltbild der Anordnung sind die Umschalteinheiten CS1 und CS2 Bestandteile eines Differenzverstärkers mit den Transistoren T1 und T2 bzw. T3 und T4 ausgebildet. Die Stromquellen CG1 und CG2 des Differenzverstärkers enthalten jeweils einen Transistor T5 bzw. T6 und einen in Serie mit diesen angeordneten Widerstand R1 bzw. R2. Die Steuersignale S1 bzw. S2 zum Einstellen der konstanten Ströme IB bzw. ID werden jeweils über einen Widerstand R3 bzw. R4 zugeführt.

Die Vormagnetisierungssignale B1 und B2 werden über das Filter F1 als gefilterte Vormagnetisierungssignale FB1 bzw. FB2 den Basen des Transistors T1 bzw. T2 zugeführt. Das Filter F1 enthält zwei serielle Widerstände R5 und R6 und einen Kondensator C1. In entsprechender Weise werden die Datensignale D1 und D2 über das Filter F2 als gefilterte Datensignale FD1 bzw. FD2 den Basen der Transistoren T4 bzw. T3 zugeführt. Das Filter F2 ist in ähnlicher Weise ausgebildet wie das Filter F1 und enthält Widerstände R7 und R8 sowie einen Kondensator C2.

Die Schalteinheiten SW1 und SW2 werden aus jeweils zwei Transistoren T7 und T8 bzw. T9 und T10 gebildet, deren Basen durch von einer Kanalauswahleinheit CH1 bzw. CH2 abgegebene Steuersignale S4 bzw. S5 angesteuert werden, um die Ströme IB und ID entweder dem aus den Wicklungen W1 und W2 gebildeten Schreibkopf oder einem aus den Wicklungen W3 und W4 gebildeten Schreibkopf im Magnetkopf H zuzuführen.

Die Datensignale D2 werden auch dem Impulsgenerator PG zugeführt, der die Impulse P unter Verwendung eines aus einem Widerstand R9 und einem Kondensator C3 gebildeten Verzögerungsglieds und eines Antivalenzglieds G erzeugt, wobei die Pulsdauer des Impulses P durch die Zeitkonstante des RC-Glieds festgelegt wird. Der Impuls P gelangt über ein aus einem Transistor T11 und Kondensatoren C4 und C5 gebildetes Integrierglied als Signal S3 zur Stromquelle CG2. Dort wird es einem Widerstand R10 zugeführt, der parallel zum Widerstand R2 angeordnet ist. Während der Dauer des Signals S3 wird der Transistor T11 leitend gesteuert und der Widerstand R10 wird parallel zum Widerstand R2 geschaltet, so daß der Datenstrom ID kurzzeitig erhöht wird.

Wenn zum Zeitpunkt t1 die Vormagnetisierungssignale B1 und B2 und die Datensignale D1 und D2 die in FIG 2 dargestellten Binärwerte annehmen, werden die Transistoren T1 und T3 gesperrt und die Transistoren T2 und T4 leitend gesteuert. Unter der Annahme, daß infolge einer Kanalauswahl das Signal S4 die Transistoren T7 und T8 leitend steuert und das Signal S5 die Transistoren T9 und T10 sperrt, fließt nun ein Schreibstrom IW von der Spannungsquelle für die Betriebsspannung U über die Wicklung W2 und den Transistor T8 einerseits als Vormagnetisierungsstrom IB über die Transistoren T2 und T5 und den Widerstand R1 und andererseits als Datenstrom ID über die Transistoren T4 und T6 und den Widerstand R2 sowie über den Widerstand R10 und den Transistor T11.

Wenn zum Zeitpunkt t2 die Vormagnetisierungssignale B1 und B2 ihre Binärwerte ändern, wird der Transistor T1 leitend gesteuert und der Transistor T2 gesperrt. Damit fließt der Datenstrom ID weiterhin über die Wicklung W2 und die Transistoren T8 und T4, jedoch fließt der Vormagnetisierungsstrom IB über die Wicklung W1 und die Transistoren T7, T1 und T5. Im Transistor T5 ändert sich der Vormagnetisierungsstrom IB nicht, da die Transistoren T1 und T2 abwechselnd den Vormagnetisierungsstrom IB führen und infolge des Filters F1 der Vormagnetisierungsstrom IB verzögert wird und die Flankensteilheit beim Schalten der Transistoren T1 und T2 verringert wird, so daß keine übermäßigen Spannungen an den Wicklungen W1 und W2 auftreten.

Zum Zeitpunkt t3 wird der Impuls P beendet und der Transistor T11 gesperrt, so daß der Datenstrom ID langsam auf einen Nominalwert vermindert wird.

Zum Zeitpunkt t4 ändern sich die Binärwerte der Vormagnetisierungssignale B1 und B2 erneut, so daß wie beim Zeitpunkt t1 der Transistor T1 gesperrt wird und der Transistor T2 leitend gesteuert wird.

Wenn zu einem späteren Zeitpunkt das Datensignal D1 seinen Binärwert ändert, wird der Transistor T4 gesperrt und der Transistor T3 leitend gesteuert und gleichzeitig ein neuer Impuls P erzeugt. Der Datenstrom ID fließt dann über die Wicklung W1, den Transistor T7 und den Transistor T3 zum Transistor T6. Auch hier erfolgt durch das Filter F2 eine welche Umschaltung, so daß keine übermäßigen Spannungen an den Wicklungen W1 und W2 auftreten.

Falls mit dem aus den Wicklungen W3 und W4 gebildeten Schreibkopf eine Aufzeichnung erfolgen soll, werden die Transistoren T9 und T10 durch das Signal S5 leitend gesteuert, während die Transistoren T7 und T8 durch das Steuersignal S4 gesperrt werden. Es wiederholen sich dann die entsprechenden Vorgänge wie in den Wicklungen W1 und W2 nun in den Wicklungen W3 und W4.

Als Filter F1 und F2 können auch LC-Tiefpaßfilter verwendet werden, jedoch erweisen sich die RC-Tiefpaßfilter als sehr kostengünstig. Es ist auch möglich, nur ein einziges Filter, entweder für die Vormagnetisierungssignale B oder die Datensignale D zu verwenden.

**Patentansprüche**

1. Anordnung zum Aufzeichnen von Daten auf einen magnetischen Aufzeichnungsträger unter Verwendung eines Verstärkers (A) mit Ausgängen, die mit einem Magnetkopf (H) verbunden sind, der die Daten auf den Aufzeichnungsträger aufzeichnet und mit Eingängen, die Vormagnetisierungssignalen (B) bzw. den aufzuzeichnenden Daten entsprechenden Datensignalen (D) zugeordnet und denen Filter (F1, F2) vorgeschaltet sind, die als Tiefpaßfilter derart ausgebildet sind, daß sie die Vormagnetisierungssignale (B) bzw. die Datensignale (D) verzögern und infolgedessen die Steilheit des Schreibstroms im Magnetkopf (H) begrenzen.

2. Anordnung nach Anspruch 1, bei der der Verstärker eine erste und zweite Verstärkerstufe enthält, deren Ausgänge parallel geschaltet sind und an deren Eingängen die Vormagnetisierungssignale bzw. die Datensignale nicht invertiert und invertiert anliegen, **dadurch gekennzeichnet,** daß den Eingängen der ersten Verstärkerstufe (CS1, CG1) bzw. der zweiten Verstärkerstufe (CS2, CG2) jeweils ein Filter (F1 bzw. F2) vorgeschaltet ist, an dem die nicht invertierten und die invertierten Vormagnetisierungssignale (B) bzw. Datensignale (D) anliegen.

3. Anordnung nach Anspruch 1 oder Anspruch 2, **dadurch gekennzeichnet,** daß die Filter (F1, F2) als RC-Tiefpaßfilter ausgebildet sind.

4. Anordnung nach Anspruch 2, **dadurch gekennzeichnet,** daß jedes Filter (F1, F2) jeweils einen seriellen Widerstand (R5 bis R8) und einen nachgeschalteten parallelen Kondensator (C1, C2) enthalten, dessen Anschlüsse mit den Eingängen der jeweiligen Verstärkerstufe (CS1, CG1 bzw. CS2, CG2) verbunden sind.

5. Anordnung nach Anspruch 2, bei der die Verstärkerstufen als Differenzverstärker ausgebildet sind, **dadurch gekennzeichnet,** daß an den Eingängen jedes Differenzverstärkers (CS1, CG1 und CS2, CG2) die Vormagnetisierungssignale (B) bzw. die Datensignale (D) über jeweils ein Filter (F1 bzw. F2) invertiert und nicht invertiert anliegen.

6. Anordnung nach einem der Ansprüche 1 bis 2, **dadurch gekennzeichnet,** daß dem Magnetkopf (H) zugeführte Schreibströme (IB, ID) in dem Verstärker (A) durch digitale Datenwörter einstellbar sind, die mittels eines Digital-Analog-Wandlers in Steuersignale (S1, S2) für den Verstärker (A) umgesetzt werden.

7. Anordnung nach einem der Ansprüche 1 bis 6, bei dem der Magnetkopf mehrere Schreibköpfe aufweist, **dadurch gekennzeichnet,** daß zwischen dem Verstärker (A) und dem Magnetkopf (H) Schalteinheiten (SW1, SW2) angeordnet sind, die den Verstärker (A) mit jeweils einem von mehreren Schreibköpfen (W1, W2 oder W3, W4) verbinden.

8. Anordnung nach einem der Ansprüche 1 bis 7, **dadurch gekennzeichnet,** daß ein Impulsgeber (PG) vorgesehen ist, der bei jeder Flanke der Datensignale (D) den Schreibstrom (ID) kurzzeitig erhöht.

9. Anordnung nach Anspruch 8, **dadurch gekennzeichnet,** daß der Impulsgeber (PG) ein Integrierglied (T11, C4, C5) enthält.

## Claims

1. Arrangement for recording data on a magnetic recording medium using an amplifier (A) with outputs, which are connected to a magnetic head (H) which records the data onto the recording medium, and with inputs which are respectively assigned to bias signals (B) and the data signals (D), corresponding to the data to be recorded, and are preceded by filters (F1, F2), which are designed as low-pass filters in such a way that they delay the bias signals (B) and the data signals (D), respectively, and consequently limit the steepness of the write current in the magnetic head (H).

2. Arrangement according to Claim 1, in which the amplifier includes a first and a second amplifier stage, the outputs of which are connected in parallel and at the inputs of which the bias signals and the data signals are present in non-inverted and inverted form, characterised in that the inputs of the first amplifier stage (CS1, CG1) and of the second amplifier stage (CS2, CG2) are in each case preceded by a filter (F1 and F2, respectively), at which the non-inverted and the inverted bias signals (B) and data signals (D) are present.

3. Arrangement according to Claim 1 or Claim 2, characterised in that the filters (F1, F2) are designed as RC low-pass filters.

4. Arrangement according to Claim 2, characterised in that each filter (F1, F2) in each case includes a series resistor (R5 to R8) and a following parallel capacitor (C1, C2), the terminals of which are connected to the inputs of the respective amplifier stage (CS1, CG1 and CS2, CG2, respectively).

5. Arrangement according to Claim 2, in which the amplifier stages are designed as differential amplifiers, characterised in that the bias signals (B) and the data signals (D) are present in inverted and non-inverted form at the inputs of each differential amplifier (CS1, CG1 and CS2, CG2), via a filter in each case (F1 and F2, respectively).

6. Arrangement according to one of Claims 1 to 2, characterised in that write currents (IB, ID), supplied to the magnetic head (H), can be set in the amplifier (A) by digital data words, which are converted into control signals (S1, S2) for the amplifier (A) by means of a digital-analog converter.

7. Arrangement according to one of Claims 1 to 6, in which the magnetic head has a plurality of write heads, characterised in that between the amplifier (A) and the magnetic head (H) there are switching units (SW1, SW2) arranged, which connect the amplifier (A) to one in each case of a plurality of write heads (W1, W2 or W3, W4).

8. Arrangement according to one of Claims 1 to 7, characterised in that a pulse generator (PG) is provided, which briefly increases the write current (ID) at every edge of the data signals (D).

9. Arrangement according to Claim 8, characterised in that the pulse generator (PG) includes an integrating circuit (T11, C4, C5).

## Revendications

1. Dispositif pour enregistrer des données sur un support d'enregistrement magnétique moyennant l'utilisation d'un amplificateur (A) comportant des sorties reliées à une tête magnétique (H), qui enregistre les données sur le support d'enregistrement, et des entrées qui sont associées à des signaux de préaimantation (B) ou à des signaux de données (D) correspondant aux données devant être enregistrées et en amont desquelles sont branchés des filtres (F1,F2), qui sont réalisés sous la forme de filtres passe-bas de manière à retarder les signaux de préaimantation (B) ou les signaux de données (D) et limiter par conséquent la pente du courant d'enregistrement dans la tête magnétique (H).

2. Dispositif suivant la revendication 1, dans lequel l'amplificateur comporte des premier et second étages amplificateurs, dont les sorties sont branchées en parallèle et aux entrées desquelles les signaux de préaimantation et les signaux de données sont appliqués d'une manière non inversée et d'une manière inversée, caractérisé par le fait qu'en amont des entrées du premier étage amplificateur (CS1, CG1) et du second étage amplificateur (CS2,CG2) sont branchés des filtres respectifs (F1 et F2), auxquels sont appliqués les signaux de préaimantation (B) et les signaux de données (B) non inversés et ces mêmes signaux inversés.

3. Dispositif suivant la revendication 1 ou 2, caractérisé par le fait que les filtres (F1,F2) sont réalisés sous la forme de filtres passe-bas (RC).

4. Dispositif suivant la revendication 2, caractérisé par le fait que chaque filtre (F1,F2) contient respectivement une résistance série (R5 à R8) et un condensateur parallèle (C1,C2) branché en aval et dont les bornes sont reliées aux entrées de l'étage amplificateur respectif (CS1,CG1 ou CS2,CG2).

5. Dispositif suivant la revendication 2, dans lequel les étages amplificateurs sont réalisés sous la forme d'amplificateurs différentiels, caractérisé par le fait que les signaux de préaimantation (B) ou les signaux de données (D) sont envoyés d'une manière inversée et d'une manière non inversée, par l'intermédiaire de filtres respectifs (F1 ou F2), aux entrées de chaque amplificateur différentiel (CS1,CG1 et CS2,CG2).

6. Dispositif suivant l'une des revendications 1 et 2, caractérisé par le fait que des courants d'enregistrement (IB,ID) envoyés à la tête magnétique (H) peuvent être réglés dans l'amplificateur (A) par des mots de données numériques, qui sont convertis à l'aide d'un convertisseur numérique/analogique, en des signaux de commande (S1,S2) pour l'amplificateur (A).

7. Dispositif suivant l'une des revendications 1 à 6, dans lequel la tête magnétique comporte plusieurs têtes d'enregistrement, caractérisé par le fait qu'entre l'amplificateur (A) et la tête magnétique (H) sont disposées des unités de commutation (SW1,SW2), qui relient l'amplificateur (A) à l'une respective de plusieurs têtes d'enregistrement (W1,W2 ou W3,W4).

8. Dispositif suivant l'une des revendications 1 à 7, caractérisé par le fait qu'il est prévu un générateur d'impulsions (PG), qui, lors de l'apparition de chaque flanc des signaux de données (D), accroît pendant un bref intervalle de temps le courant d'enregistrement (ID).

9. Dispositif suivant la revendication 8, caractérisé par le fait que le générateur d'impulsions (PG) comporte un circuit intégrateur (T11,C4,C15).

FIG 1

FIG 2

# FIG 3